# EUROPEAN PATENT SPECIFICATION

(11) **EP 2 687 319 B1**
(45) Date of publication and mention of the grant of the patent: **05.04.2017**
(21) Application number: 12864329.3
(22) Date of filing: 24.08.2012
(51) Int. Cl.: B23P 15/26, F28F 3/06, F28D 15/02, F28F 3/12, F28F 7/02

(54) **GRAVITY CIRCUIT HEAT PIPE RADIATOR, CONDENSER AND PREPARATION PROCESS**
WÄRMEROHRSTRAHLER MIT EINER SCHWERKRAFTSCHALTUNG, KONDENSATOR UND HERSTELLUNGSVERFAHREN DAFÜR
RADIATEUR À CALODUC DE TYPE À GRAVITÉ, CONDENSEUR ET PROCÉDÉ DE PRÉPARATION

(30) Priority: 05.01.2012 CN 201210002231
(43) Date of publication of application: 22.01.2014
(73) Proprietor: Huawei Technologies Co., Ltd., Longgang District Shenzhen, Guangdong 518129 (CN)
(72) Inventor: CHEN, Hongliang, Shenzhen Guangdong 518129 (CN); WANG, Bin, Shenzhen Guangdong 518129 (CN); MENG, Naier, Shenzhen Guangdong 518129 (CN)
(74) Representative: Isarpatent
(86) International application number: PCT/CN2012/080534
(87) International publication number: WO 2013/102357

(56) References cited:
- EP-A2- 1 909 053
- CN-A- 101 118 077
- CN-A- 101 122 413
- CN-A- 102 528 409
- CN-U- 202 095 242
- JP-A- H02 110 296
- US-A1- 2004 261 986
- US-A1- 2005 241 806

## Description

### TECHNICAL FIELD

The present invention relates to the field of heat exchange technologies, and in particular to a method for producing a condenser in a gravity loop heat pipe heat sink. It relates furthermore to a condenser in a gravity loop heat pipe heat sink.

### BACKGROUND

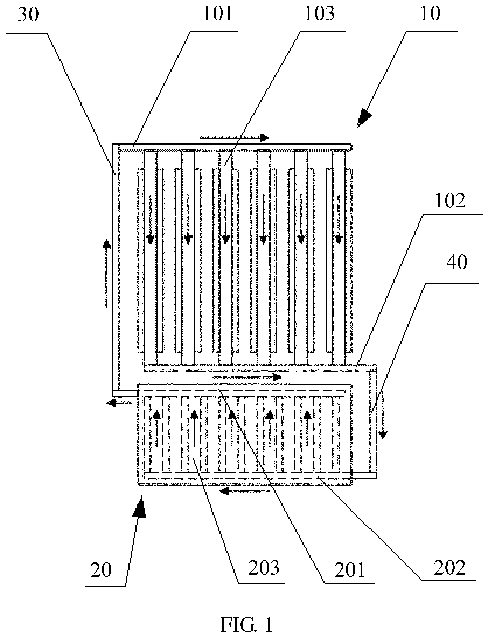

A gravity loop heat pipe heat sink (such as Loop Thermosyphon, LTS) is a two-phase phase-change heat sink. Refer to FIG. 1. FIG. 1 is a schematic diagram of working principles of a heat sink in the prior art.

The heat sink mainly consists of four parts: an evaporator substrate 20, a condenser 10, a vapour rising pipeline 30, and a liquid return pipeline 40.

The evaporator substrate 20 has longitudinal pipelines 203. A transverse liquid gathering pipeline 202 exists at a lower end of the evaporator substrate 20, and a transverse vapour gathering pipeline 201 exists at an upper end of the evaporator substrate 20. The condenser 10 has longitudinal pipelines 103. A transverse vapour gathering pipeline 101 exists at an upper end of the condenser 10, and a longitudinal liquid gathering pipeline 102 exists at a lower end of the condenser 10. The vapour gathering pipeline 201 at the upper end of the evaporator 20 is connected through the vapour rising pipeline 30 on the left side to the vapour gathering pipeline 101 at the upper end of the condenser 10. The liquid gathering pipeline 102 at the lower end of the condenser 10 is connected through the liquid return pipeline 40 on the right side to the liquid gathering pipeline 202 at the lower end of the evaporator 20.

The working principles of the heat sink are as follows: The evaporator substrate 20 contacts a heat source (such as a wireless radio frequency module), and absorbs heat of the heat source; a liquid working medium (in the liquid gathering pipeline 202 and the longitudinal pipelines 203) inside the evaporator substrate 20 evaporates after being heated; generated vapour reaches, after passing the vapour gathering pipeline 201 and the vapour rising pipeline 30, the vapour gathering pipeline 101 at the upper end of the condenser 10; then the vapour goes downward along the longitudinal pipelines 103 of the condenser 10, and exchanges heat with air around the longitudinal pipelines 103 so as to achieve condensation and heat dissipation; when reaching the liquid gathering pipeline 102 at the lower end of the condenser 10, the vapour completely condenses into liquid; and finally, the vapour flows back through the liquid return pipeline 40 to the liquid gathering pipeline 202 of the evaporator substrate 20 to finish a cycle.

US 2005/241806 A1 discloses a radiator plate cooling apparatus including a base deck and radiation fins located there above. The radiation fins are formed integrally by extrusion, forging or soldering. The base deck has passages formed by machining or by extrusion.

EP 1 909 053 A2 discloses a heat dissipating system. The system includes a condenser and a heat absorbing unit. A fluid flows from the condenser to the heat absorbing unit by gravity and from the heat absorbing unit to the condenser by natural convection.

In the prior art, a main body of the condenser 10 is mainly made up of several pipes, and the pipes form the longitudinal pipelines 103. The two ends of each pipe are respectively connected in a welding manner to the vapour gathering pipeline 101 and the liquid gathering pipeline 102. Therefore, there are excessive welding joints between the pipes of the condenser 10 and the vapour gathering pipeline 101 or the liquid gathering pipeline 102. This causes relatively difficult manufacturing and relatively high manufacturing costs, and consistency can hardly be ensured during production and manufacturing. In addition, the excessive welding joints also affect sealing performance, device strength, or the like, of the condenser 10, and further affect operating reliability of the condenser 10.

### SUMMARY

An objective of the present invention is to provide a condenser in a gravity loop heat pipe heat sink and a method for producing the condenser, so as to resolve the following problem with the prior art: Operating reliability is relatively low due to excessive welding joints for connecting a longitudinal channel of a condenser to a transverse channel of the condenser. The method for producing the condenser enables the longitudinal channel of the condenser and the transverse channel of the condenser to be integrated without requiring welding, and operating reliability of the condenser manufactured by using the production method is relatively high. Another objective of the present invention is to provide a gravity loop heat pipe heat sink and a method for producing the gravity loop heat pipe heat sink.

To attain the objectives of the present invention, the present invention provides a method for producing a condenser in a gravity loop heat pipe heat sink comprising the features of claim 1 and a condenser in a gravity loop heat pipe heat sink comprising the features of claim 10. Preferred embodiments are stated in the dependent claims.

The method includes the following steps:
squeezing a base material of a condenser to form a condenser substrate and several longitudinal channels of the condenser, where the longitudinal channels of the condenser are parallel to and thread through the condenser substrate, and the longitudinal channels of the condenser are configured to condense vapour;
drilling holes at the two ends of the condenser substrate to form transverse channels of the condenser that are connected to the longitudinal channels of the condenser, where the transverse channels of the condenser at the two ends respectively support circulation of vapour and liquid that is formed after vapour is condensed;
sealing ends of the longitudinal channels of the condenser and ends of the transverse channels of the condenser according to determined holes on the condenser that are connected to the outside; and
milling substrate materials between the longitudinal channels of the condenser, so that a gap exists between adjacent longitudinal channels of the condenser.

In the method for producing a condenser in a gravity loop heat pipe heat sink according to the embodiments of the present invention, longitudinal channels of the condenser are formed by using a squeezing technology, and transverse channels of the condenser are formed on a substrate by using a drilling method. That is, the longitudinal channels of the condenser and the transverse channels of the condenser are formed on the substrate by using the squeezing and drilling methods. Therefore, the longitudinal channels of the condenser and the transverse channels of the condenser are integrated and do not need to be connected in a welding manner. Therefore, no welding joints exist between the longitudinal channels and the transverse channels of the condenser formed by using this production method, so that sealing performance, strength, or the like, of the condenser can be ensured and the condenser formed by using this production method has relatively high operating reliability.

### BRIEF DESCRIPTION OF DRAWINGS

FIG. 1 is a schematic diagram of working principles of a gravity loop heat pipe heat sink in the prior art;
FIG. 2 is a schematic structural diagram of a gravity loop heat pipe heat sink according to a specific embodiment of the present invention;
FIG. 3 is a schematic structural diagram of a condenser shown in FIG. 2;
FIG. 4 is a side view of the condenser shown in FIG. 3;
FIG. 5 is a flowchart of a method for producing a condenser in a gravity loop heat pipe heat sink according to an example; and
FIG. 6 is a flowchart of a method for producing a condenser in a gravity loop heat pipe heat sink according to an embodiment of the present invention.

### DESCRIPTION OF EMBODIMENTS

One core of the present invention is to provide a condenser in a gravity loop heat pipe heat sink and a method for producing the condenser. The method for producing the condenser enables a longitudinal channel of the condenser and a transverse channel of the condenser to be integrated without requiring welding, and operating reliability of the condenser manufactured by using the production method is relatively high. Another core of the present invention is to provide a gravity loop heat pipe heat sink and a method for producing the gravity loop heat pipe heat sink.

To help a person of ordinary skill in the art to better understand the technical solutions of the present invention, the following further describes in detail the present invention with reference to the accompanying drawings and specific embodiments. For ease of understanding and simplicity of discussion, the following describes the condenser in combination with overall structure of the gravity loop heat pipe heat sink and production methods thereof, and no further details about beneficial effects are provided herein.

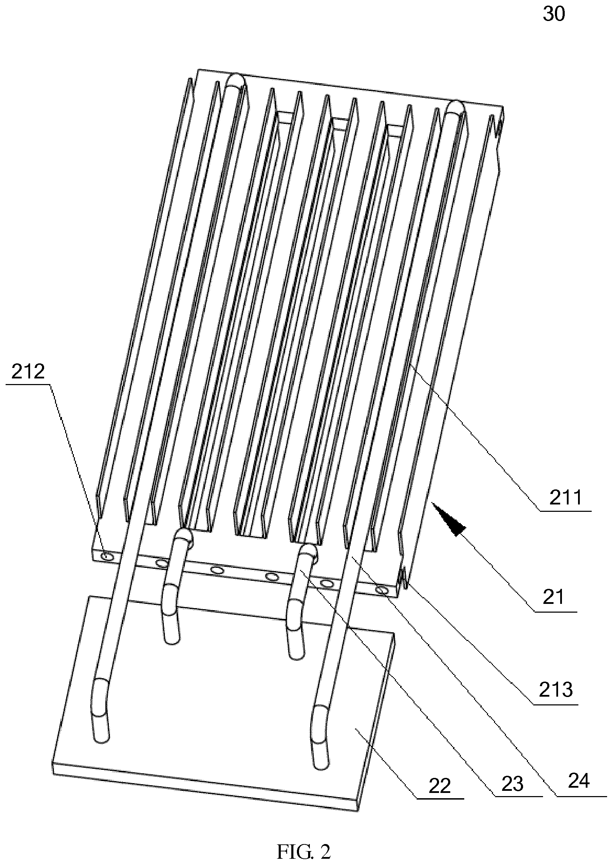

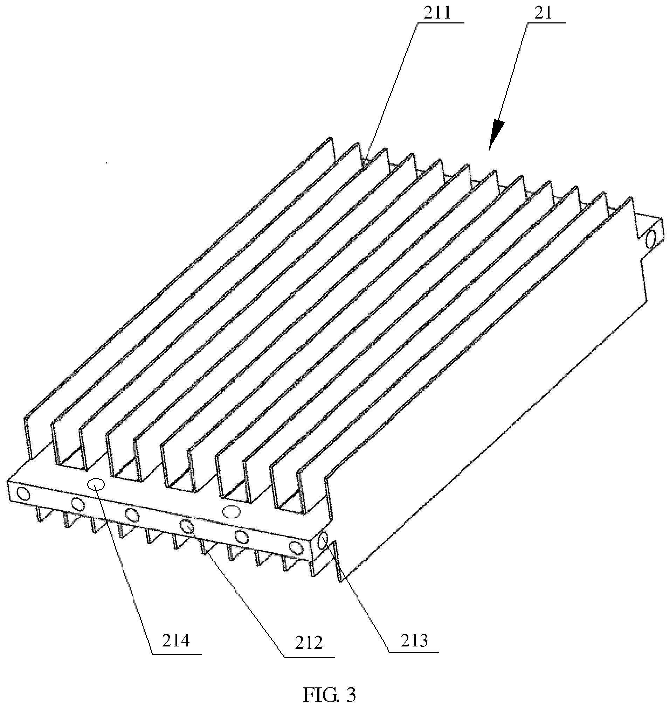

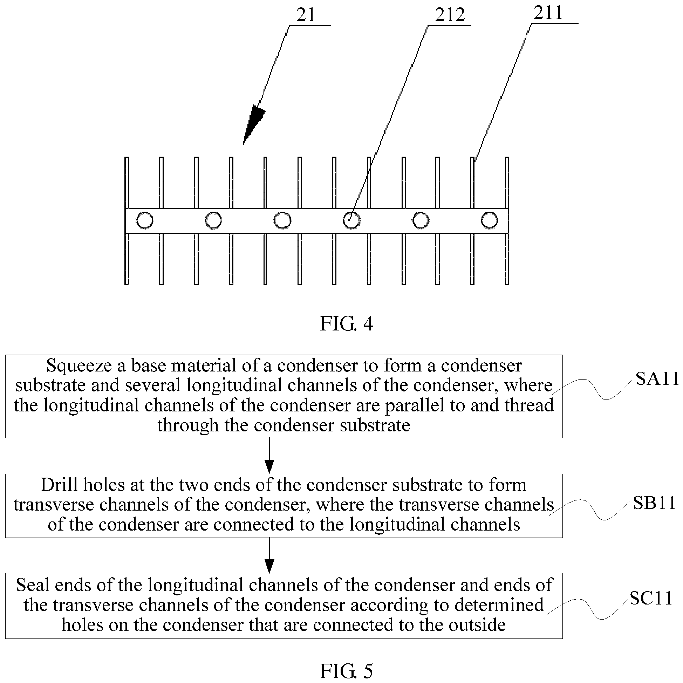

Refer to FIG. 2 to FIG. 4. FIG. 2 is a schematic structural diagram of a gravity loop heat pipe heat sink according to a specific embodiment of the present invention; FIG. 3 is a schematic structural diagram of a condenser shown in FIG. 2; and FIG. 4 is a side view of the condenser shown in FIG. 3.

In this embodiment, the heat sink includes a condenser 21 and an evaporator 22. It may be seen from FIG. 2 that, the condenser 21 has transverse channels 213 at an upper end and a lower end (as viewed from an angle shown in FIG. 2) of the condenser and longitudinal channels 212 of the condenser in the part between the upper end and the lower end of the condenser. The transverse channel 213 at the upper end is a vapour gathering pipeline, and the longitudinal channel 213 at the lower end is a liquid gathering pipeline. Vapour flows through a vapour rising pipeline 23 to the transverse channel 213 of the condenser at the upper end of the condenser 21, flows downward through the part between the upper end and the lower end of longitudinal channels 212 of the condenser, enters the transverse channel 213 of the condenser at the lower end of the condenser 21 after exchanging heat and condensing into a liquid state, and then flows back to the evaporator 22. Different from the prior art, the transverse channels 213 of the condenser 21 and the longitudinal channels 212 of the condenser are integrated. The transverse channels 213 of the condenser and the longitudinal channels 212 of the condenser shown in FIG. 2 are formed on a same substrate.

Refer to FIG. 5. FIG. 5 is a flowchart of a method for producing a condenser in a gravity loop heat pipe heat sink according to an example.

For the method for producing the condenser 21 of this structure, reference may be made to the following steps:
SA11) Squeeze a base material of the condenser to form several parallel longitudinal channels 212 of the condenser.

The base material of the condenser may be a metal material, such as aluminum, aluminum alloy, copper, or magnesium alloy. The base material of the condenser is placed into a die, and pressurized under a high temperature according to an existing squeezing technology to form a substrate of the condenser and several longitudinal channels 212 of the condenser, where the longitudinal channels 212 of the condenser thread through the condenser substrate. Using an azimuth shown in FIG. 2 as an example, the longitudinal channels 212 of the condenser thread through an upper end and a lower end of the condenser substrate. Generally, there are three or more longitudinal channels 212 of the condenser so as to ensure the condensation efficiency of vapour.

SB11) Drill holes at the two ends of the condenser substrate to form transverse channels 213 of the condenser, where the transverse channels 213 of the condenser are connected to the longitudinal channels 212 of the condenser.

The transverse channels 213 of the condenser are perpendicular to the longitudinal channels 212 of the condenser. When they are perpendicular to each other, each longitudinal channel 212 of the condenser has a same length and a same vapour circulation path, with heat evenly exchanged. Certainly, considering a deviation during drilling, the transverse channels 213 of the condenser may be roughly perpendicular to the longitudinal channels 212 of the condenser.

SC11) Seal ends of the longitudinal channels 212 of the condenser and ends of the transverse channels 213 of the condenser according to determined holes on the condenser 21 that are connected to the outside.

In the process of forming the longitudinal channels 212 of the condenser and the transverse channels 213 of the condenser, all these channels thread through the substrate. That is, the two ends of each of the longitudinal channels 212 of the condenser and the two ends of each of the transverse channels 213 of the condenser are connected to the outside. The transverse channels 213 of the condenser and the longitudinal channels 212 of the condenser serve as passageways of vapour or liquid, and except for a vapour inlet and a liquid outlet (which are two holes connected to the outside), the transverse channels 213 of the condenser and the longitudinal channels 212 of the condenser should be sealed cavities. Therefore, the ends of the transverse channels 213 of the condenser and the ends of the longitudinal channels 212 of the condenser need to be sealed.

In the sealing process, when it is determined that the vapour inlet and the liquid outlet are arranged at the ends of the transverse channels 213 of the condenser, the two ends of each longitudinal channel 212 of the condenser may be sealed, with the two ends of each of the transverse channel 213 at the upper end of the condenser serving as vapour inlets, and the two ends of each of the transverse channel 213 at the lower end of the condenser serving as liquid outlets; or one end of each of the two transverse channels 213 of the condenser is sealed, and the other end respectively serves as the vapour inlet and the liquid outlet, in which case a vapour rising pipeline 23 and a liquid return pipeline 24 need to be located on two sides of the substrate. Alternatively, when it is determined that both the vapour inlet and the liquid outlet are arranged on the transverse channels 213 of the condenser, the two ends of each of the transverse channels 213 of the condenser may be sealed while some of the longitudinal channels 212 of the condenser are sealed, so that the ends (which are also located on the transverse channels 213 of the condenser) of the unsealed longitudinal channels 212 of the condenser serve as vapour inlets or liquid outlets to meet a requirement. The ends of the longitudinal channels 212 of the condenser or the ends of the transverse channels 213 of the condenser may be sealed in a welding manner. As shown in FIG. 2, all the ends of the longitudinal channels 212 of the condenser and all the ends of the transverse channels 213 of the condenser are sealed. It should be noted that, the preceding steps are actually not subject to a sequence limitation. Certainly, the sealing of the longitudinal channels 212 of the condenser is performed surely after the squeezing process, and the step of sealing the transverse channels 213 of the condenser is performed surely after the drilling process.

In the method for producing a condenser 21 in a heat sink according to this example, a condenser substrate and a longitudinal channel 212 of the condenser on the condenser substrate are formed by using a squeezing technology, and a transverse channel 213 of the condenser is formed by using a drilling method on the substrate. That is, the longitudinal channel 212 of the condenser and the transverse channel 213 of the condenser are formed on the substrate by using the squeezing and drilling methods. In this way, the longitudinal channel 212 of the condenser and the transverse channel 213 of the condenser are integrated and do not need to be connected in a welding manner. Therefore, no welding joints exist between the longitudinal channel 212 and the transverse channel 213 of the condenser formed by using this production method, so that sealing performance, strength, or the like, of the condenser 21 can be ensured and the condenser 21 formed by using this production method has relatively high operating reliability.

A method for manufacturing the evaporator 22 in the heat sink in this example is similar to the method for manufacturing the condenser 21, and may include the following steps:
Step 1: Squeeze a base material of the evaporator to form an evaporator substrate and several longitudinal channels of the evaporator, where the longitudinal channels of the evaporator are parallel to and thread through the evaporator substrate.

Similarly, the base material used for manufacturing the evaporator 22 may be a metal material, such as aluminum, aluminum alloy, copper, or magnesium alloy. The base material is squeezed under a high temperature in a die to form the substrate of the evaporator and the longitudinal channels of the evaporator, where the longitudinal channels of the evaporator thread through the substrate. The evaporator 22 is mainly configured to contact a heat source. Therefore, the evaporator 22 after the manufacturing should preferably appear to be a plate, so that there is a largest area of contact between the evaporator 22 and the heat source, thereby improving the heat transfer efficiency of the heat source and further improving heat dissipation performance.

Step 2: Drill holes at the two ends of the evaporator substrate to form transverse channels of the evaporator (two transverse channels of the evaporator respectively serve as a vapour gathering pipeline and a liquid gathering pipeline), where the transverse channels of the evaporator are connected to the longitudinal channels of the evaporator.

Similarly, the transverse channels of the evaporator are perpendicular to the longitudinal channels of the evaporator.

Step 3: Seal ends of the longitudinal channels of the evaporator and ends of the transverse channels of the evaporator according to determined holes on the evaporator that are connected to the outside.

Similarly, there are multiple manners of sealing the longitudinal channels of the evaporator 22 and the transverse channels of the evaporator 22. The preceding steps should not be construed as a sequence limitation on the process, and no further details are provided herein. During drilling, a liquid filling hole may be made on a transverse channel of the evaporator 22 or the condenser 21 and configured to add a heat dissipation medium inside the heat sink.

After the condenser 21 and the evaporator 22 are manufactured, the evaporator 22 and the condenser 21 may be fixed by using tooling according to positions designed in advance, with the two ends of the vapour rising pipeline 23 respectively aligned with a vapour outlet of the evaporator 22 and a vapour inlet of the condenser 21, and the two ends of the liquid return pipeline 24 respectively aligned with a liquid inlet of the evaporator 22 and a liquid outlet of the condenser 21. The liquid return pipeline 24 and the vapour rising pipeline 23 are fixed by using the tooling. Then the evaporator 22 and the condenser 21 are welded with the vapour rising pipeline 23 and the liquid return pipeline 24 in a brazing welding manner or in another welding manner, so as to form the whole heat sink provided in this example. Finally, the heat sink is vacuumized, a heat dissipation medium is added from the liquid filling hole, and the liquid filling hole is welded and sealed. Then the manufacturing of the heat sink is complete. Actually the ends of the made transverse channels 213 of the condenser, the longitudinal channels 212 of the condenser, the transverse channels of the evaporator, and the longitudinal channels of the evaporator may all serve as liquid filling holes. Therefore, separate drilling is not required to form a liquid filling hole. In this case, a liquid filling hole may be reserved during the sealing of the transverse channels and the longitudinal channels, and the liquid filing hole is welded after the heat dissipation medium is added.

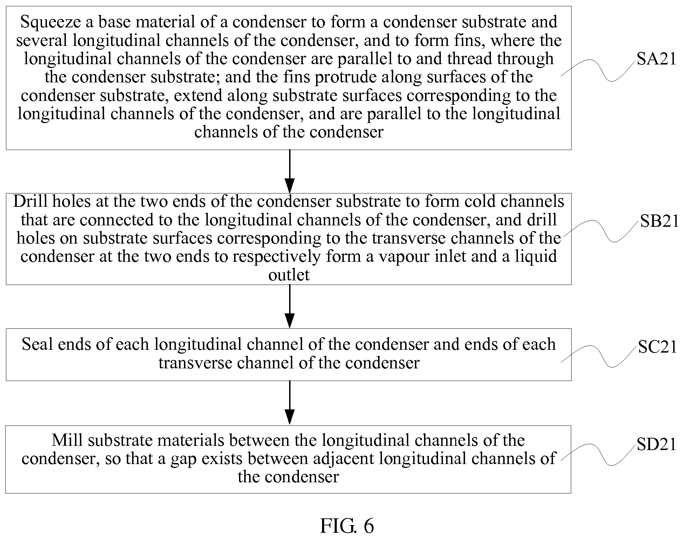

Refer to FIG. 6. FIG. 6 is a flowchart of a method for producing a condenser in a gravity loop heat pipe heat sink according to another specific embodiment of the present invention.

SA21) Squeeze a base material of a condenser to form a condenser substrate and several longitudinal channels 212 of the condenser, and to form fins 211, where the longitudinal channels 212 of the condenser are parallel to and thread through the condenser substrate; and the fins 211 protrude along a substrate surface of the condenser substrate, extend along substrate surfaces corresponding to the longitudinal channels 212 of the condenser, and are parallel to the longitudinal channels 212 of the condenser.

In this embodiment, compared with a first example, when the substrate is formed by squeezing, the fins 211 may be simultaneously formed during the squeezing by improving the die. As shown in FIG. 4, there are the fins 211 on both the upper and the lower substrate surfaces (as viewed from an angle shown in FIG. 4) of the condenser 21. The fins 211 can enlarge an area of contact with air. That is, a heat exchange area is enlarged, so that vapour more quickly condenses into a liquid state. When the evaporator 22 is manufactured by using the same method, the fins may also be made by using this method.

SB21) Drill holes at the two ends of the condenser substrate to form transverse channels 213 of the condenser, where the transverse channels 213 of the condenser are connected to the longitudinal channels 212 of the condenser, and drill holes on substrate surfaces corresponding to the transverse channels 213 of the condenser at the two ends to respectively form a vapour inlet and a liquid outlet 214.

SC21) Seal ends of each longitudinal channel 212 of the condenser and ends of each transverse channel 213 of the condenser.

In combination with steps SB21 and SC21, it should be understood that after the two ends of each longitudinal channel 212 of the condenser and the two ends of each transverse channel 213 of the condenser are sealed, passageways of vapour and liquid are sealed cavities. In addition, holes are drilled on substrate surfaces corresponding to the transverse channels 213 of the condenser to form the vapour inlet and the liquid outlet 214 (As shown in FIG. 3, there are two second condenser openings, and the vapour inlet is not indicated in the figure but located on a substrate surface corresponding to the other transverse channel 213 of the condenser). Then a vapour rising pipeline 23 and a liquid return pipeline 24 may be arranged on a surface of the condenser substrate and located between two fins 211. Compared with arranging the vapour rising pipeline 23 and the liquid return pipeline 24 on two sides of the condenser 21, pipeline design based on such structure enables the structure of the heat sink to be more compact, prevents the vapour rising pipeline 23 and the liquid return pipeline 24 from interfering with other structures, and achieves more flexible installation. Accordingly, a corresponding vapour outlet and a corresponding liquid inlet may be made on substrate surfaces corresponding to the transverse channels of the evaporator.

SD21) Mill substrate materials between the longitudinal channels 212 of the condenser, so that a gap exists between adjacent longitudinal channels 212 of the condenser.

The substrate materials between the longitudinal channels 212 of the condenser may be milled in a machining manner. After the milling is performed, a certain gap exists between adjacent longitudinal channels 212 of the condenser. This method reduces the weight of the condenser 21, and thereby reduces the weight of the entire heat sink. In addition, the gap between adjacent longitudinal channels 212 of the condenser helps vapour inside a longitudinal channel 212 of the condenser to contact external air, and therefore further improves heat exchange efficiency. Certainly, the milling step may be performed before step SC21.

The foregoing detailed descriptions are about a gravity loop heat pipe heat sink, a condenser, and production methods thereof provided in the present invention. Specific cases are used for illustrating principles and implementation manners of the present invention. The foregoing description about the embodiments is merely for understanding the methods and core ideas of the present invention. It should be noted that a person of ordinary skill in the part may make certain improvements or polishing without departing from the principle of the present invention and such improvements or polishing should fall within the protection scope of the claims of the present invention.

## Claims

1. A method for producing a condenser in a gravity loop heat pipe heat sink, comprising the following steps:
squeezing (A11, SA21) a base material of a condenser to form a condenser substrate and several longitudinal channels of the condenser, wherein the longitudinal channels of the condenser are parallel to and thread through the condenser substrate, and the longitudinal channels of the condenser are configured to condense vapour;
drilling (SB11, SB21) holes at the two ends of the condenser substrate to form transverse channels of the condenser that are connected to the longitudinal channels of the condenser, wherein the transverse channels of the condenser at the two ends respectively support circulation of vapour and liquid that is formed after vapour is condensed; and
sealing (SC11, SC21) ends of the longitudinal channels of the condenser and ends of the transverse channels of the condenser according to determined holes on the condenser that are connected to the outside; and
milling (SD21) substrate materials between the longitudinal channels of the condenser, so that a gap exists between adjacent longitudinal channels of the condenser.

2. The method for producing a condenser in a gravity loop heat pipe heat sink according to claim 1, wherein fins are further formed by squeezing; and the fins protrude along a substrate surface of the condenser substrate, extend along substrate surfaces corresponding to the longitudinal channels of the condenser, and are parallel to the longitudinal channels of the condenser.

3. The method for producing a condenser in a gravity loop heat pipe heat sink according to claim 2, wherein the fins are formed by squeezing surfaces on two sides of the condenser substrate.

4. The method for producing a condenser in a gravity loop heat pipe heat sink according to any one of claims 1 to 3, further comprising the following step: drilling holes on substrate surface corresponding to the transverse channels of the condenser at the two ends to respectively form a vapour inlet and a liquid outlet; and
sealing ends of the transverse channels of the condenser and ends of each of the longitudinal channels of the condenser.

5. The method for producing a condenser in a gravity loop heat pipe heat sink according to claim 4, comprising drilling surrounding walls of the transverse channels of the condenser for circulating liquid to form a liquid filling hole.

6. A method for producing a gravity loop heat pipe heat sink, wherein the heat sink has a condenser and an evaporator connected to each other, and the condenser is produced by using the production method according to any one of claims 1 to 5.

7. The method for producing a gravity loop heat pipe heat sink according to claim 6,
wherein steps of a method for producing the evaporator are as follows:
squeezing a base material of the evaporator to form a evaporator substrate and several longitudinal channels of the evaporator, wherein the longitudinal channels of the evaporator are parallel to and thread through the evaporator substrate, and the longitudinal channels of the evaporator are configured to circulate vapour;
drilling holes at the two ends of the evaporator substrate to form transverse channels of the evaporator that are connected to the longitudinal channels of the evaporator, wherein the transverse channels of the evaporator at the two ends respectively support circulation of liquid and vapour that is formed after liquid is evaporated; and
sealing ends of the longitudinal channels of the evaporator and ends of the transverse channels of the evaporator according to determined holes on the evaporator that are connected to the outside.

8. The method for producing a gravity loop heat pipe heat sink according to claim 7,
wherein fins are further formed by squeezing; and the fins protrude along a substrate surface of the evaporator substrate, extend along substrate surfaces corresponding to the longitudinal channels of the evaporator, and are parallel to the longitudinal channels of the evaporator.

9. The method for producing a gravity loop heat pipe heat sink according to claim 7 or 8, further comprising the following step: drilling holes on substrate surface corresponding to the transverse channels of the evaporator at the two ends to respectively form a vapour outlet and a liquid inlet; and
sealing ends of the transverse channels of the evaporator and ends of each of the longitudinal channels of the evaporator.

10. A condenser (21) in a gravity loop heat pipe heat sink, wherein the condenser (21) has longitudinal channels (212) and transverse channels (213), the transverse channels (213) of the condenser (21) are located at the two ends of the condenser (21), the longitudinal channels (212) of the condenser (21) and the transverse channels (213) of the condenser (21) are integrated, a substrate of the condenser (21) and the longitudinal channels (212) of the condenser (21) are formed by squeezing a base material of the condenser (21), and the transverse channels (213) of the condenser (21) are formed by drilling holes at the two ends of the substrate of the condenser (21); a vapour inlet and a liquid outlet respectively exist on the transverse channels (213) of the condenser (21) at the two ends; and the longitudinal channels (212) of the condenser (21) and the transverse channels (213) of the condenser (21) are connected to the outside through the vapour inlet and the liquid outlet,
wherein a gap formed by milling exists between adjacent longitudinal channels of the condenser.

11. The condenser (21) in a gravity loop heat pipe heat sink according to claim 10,
wherein the condenser (21) has fins (211) formed by squeezing; and the fins (211) protrude along a substrate surface of the condenser substrate, extend along substrate surfaces corresponding to the longitudinal channels (212) of the condenser (21), and are parallel to the longitudinal channels (212) of the condenser (21).

12. The condenser (21) in a gravity loop heat pipe heat sink according to claim 11,
wherein the vapour inlet and the liquid outlet are formed by drilling holes on substrate surface corresponding to the transverse channels (212) of the condenser (21).

13. A gravity loop heat pipe heat sink, comprising a condenser (21) and an evaporator (22), wherein a transverse channel of the evaporator (22), on the evaporator (22), used for vapour circulation is connected to a transverse channel (213) of the condenser (21), on the condenser (21), used for vapour circulation through a vapour rising pipeline (23); a transverse channel (213) of the condenser (21), on the condenser (21), used for liquid circulation is connected to a transverse channel of the evaporator, on the evaporator, used for liquid circulation through a liquid dropping pipeline (24) ; and the condenser (21) is the condenser (21) according to any one of claims 10 to 12.

## Patentansprüche

1. Verfahren zum Herstellen eines Kondensators in einem Gravitätskreiswärmerohrkühlkörper, das folgende Schritte umfasst:
Eindrücken (SA11, SA21) eines Grundmaterials eines Kondensators zum Bilden eines Kondensatorsubstrats und mehrerer Längskanäle des Kondensators, wobei die Längskanäle des Kondensators parallel zum Kondensatorsubstrat und durch dieses hindurchgefädelt sind, und wobei die Längskanäle des Kondensators zum Kondensieren von Dampf konfiguriert sind;
Bohren (SB 11, SB21) von Löchern bei den zwei Enden des Kondensatorsubstrats, um Querkanäle des Kondensators zu bilden, die mit den Längskanälen des Kondensators verbunden sind, wobei die Querkanäle des Kondensators bei den zwei Enden jeweils Zirkulation von Dampf und von Flüssigkeit, die sich nach dem Kondensieren von Dampf bildet, unterstützen.; und
Versiegeln (SC11, SC21) von Enden der Längskanäle des Kondensators und von Enden der Querkanäle des Kondensators gemäß bestimmter Löcher in dem Kondensator, die mit der Außenseite verbunden sind; und
Fräsen (SD21) von Substratmaterial zwischen den Längskanälen des Kondensators, so dass Lücken zwischen angrenzenden Längskanälen des Kondensators vorliegen.

2. Verfahren zum Herstellen eines Kondensators in einem Gravitationskreiswärmerohrkühlkörper nach Anspruch 1, wobei ferner Lamellen durch Eindrücken gebildet werden; und wobei die Lamellen entlang einer Substratoberfläche des Kondensatorsubstrats hervorstehen, sich entlang von Substratoberflächen, die den Längskanälen des Kondensators entsprechen, erstrecken und parallel zu den Längskanälen des Kondensators sind.

3. Verfahren zum Herstellen eines Kondensators in einem Gravitationskreiswärmerohrkühlkörper nach Anspruch 2, wobei die Lamellen durch Eindrücken von Oberflächen auf zwei Seiten des Kondensatorsubstrats gebildet werden.

4. Verfahren zum Herstellen eines Kondensators in einem Gravitationskreiswärmerohrkühlkörper nach einem der Ansprüche 1 bis 3, das ferner den folgenden Schritt umfasst: Bohren von Löchern, die den Querkanälen des Kondensators entsprechen, in eine Substratoberfläche bei den zwei Enden, um jeweils einen Dampfeinlass und einen Flüssigkeitsauslass zu bilden; und
Versiegeln von Enden der Querkanäle des Kondensators und von Enden von jedem der Längskanäle des Kondensators.

5. Verfahren zum Herstellen eines Kondensators in einem Gravitationskreiswärmerohrkühlkörper nach Anspruch 4, das Bohren von umgebenden Wänden der Querkanäle des Kondensators für Flüssigkeitszirkulation umfasst, um ein Flüssigkeitseinfüllloch zu bilden.

6. Verfahren zum Herstellen eines Gravitationskreiswärmerohrkühlkörpers, wobei der Kühlkörper einen Kondensator und einen Verdampfer aufweist, die miteinander verbunden sind, und der Kondensator durch Verwenden des Herstellungsverfahrens nach einem der Ansprüche 1 bis 5 hergestellt ist.

7. Verfahren zum Herstellen eines Gravitationskreiswärmerohrkühlkörpers nach Anspruch 6, wobei Schritte eines Verfahrens zum Herstellen des Verdampfers wie folgend sind:
Eindrücken eines Grundmaterials des Verdampfers zum Bilden eines Verdampfersubstrats und mehrerer Längskanäle des Verdampfers, wobei die Längskanäle des Verdampfers parallel zum Verdampfersubstrat und durch dieses hindurchgefädelt sind, und wobei die Längskanäle des Verdampfers zum Zirkulieren von Dampf konfiguriert sind;
Bohren von Löchern bei den zwei Enden des Verdampfersubstrats, um Querkanäle des Verdampfers zu bilden, die mit den Längskanälen des Verdampfers verbunden sind, wobei die Querkanäle des Verdampfers bei den zwei Enden jeweils Zirkulation von Flüssigkeit und Dampf, der sich nach dem Verdampfen von Flüssigkeit bildet, unterstützen.; und
Versiegeln von Enden der Längskanäle des Verdampfers und von Enden der Querkanäle des Verdampfers gemäß bestimmter Löcher in dem Verdampfer, die mit der Außenseite verbunden sind.

8. Verfahren zum Herstellen eines Gravitationskreiswärmerohrkühlkörpers nach Anspruch 7, wobei ferner Lamellen durch Eindrücken gebildet werden; und wobei die Lamellen entlang einer Substratoberfläche des Verdampfersubstrats hervorstehen, sich entlang von Substratoberflächen, die den Längskanälen des Verdampfers entsprechen, erstrecken und parallel zu den Längskanälen des Verdampfers sind.

9. Verfahren zum Herstellen eines Gravitationskreiswärmerohrkühlkörpers nach Anspruch 7 oder 8, das ferner den folgenden Schritt umfasst: Bohren von Löchern, die den Querkanälen des Verdampfers entsprechen, in eine Substratoberfläche bei den zwei Enden, um jeweils einen Dampfauslass und einen Flüssigkeitseinlass zu bilden; und
Versiegeln von Enden der Querkanäle des Verdampfers und von Enden von jedem der Längskanäle des Verdampfers.

10. Kondensator (21) in einem Gravitationskreiswärmerohrkühlkörper, wobei der Kondensator (21) Längskanäle (212) und Querkanäle (213) aufweist, wobei sich die Querkanäle (213) des Kondensators (21) bei den zwei Enden des Kondensators (21) befinden, die Längskanäle (212) des Kondensators (21) und die Querkanäle (213) des Kondensators integriert sind, ein Substrat des Kondensators (21) und die Längskanäle (212) des Kondensators (21) durch Eindrücken eines Grundmaterials des Kondensators (21) gebildet sind und die Querkanäle (213) des Kondensators (21) durch Bohren von Löchern bei den zwei Enden des Substrats des Kondensators (21) gebildet sind; wobei ein Dampfeinlass und ein Flüssigkeitsauslass jeweils an den Querkanälen (213) des Kondensators (21) bei den zwei Enden vorliegen; und wobei die Längskanäle (212) des Kondensators (21) und die Querkanäle (213) des Kondensators durch den Dampfeinlass und den Flüssigkeitsauslass mit der Außenseite verbunden sind, wobei eine durch Fräsen gebildete Lücke zwischen angrenzenden Längskanälen des Kondensators vorliegt.

11. Kondensator (21) in einem Gravitationskreiswärmerohrkühlkörper nach Anspruch 10, wobei der Kondensator (21) Lamellen (211) aufweist, die durch Eindrücken gebildet sind; und wobei die Lamellen (211) entlang einer Substratoberfläche des Kondensatorsubstrats hervorstehen, sich entlang von Substratoberflächen, die den Längskanälen (212) des Kondensators (21) entsprechen, erstrecken und parallel zu den Längskanälen (212) des Kondensators (21) sind.

12. Kondensator (21) in einem Gravitationskreiswärmerohrkühlkörper nach Anspruch 11, wobei der Dampfeinlass und der Flüssigkeitsauslass durch Bohren von Löchern in Substratoberflächen, die den Querkanälen (213) des Kondensators (21) entsprechen, gebildet sind.

13. Gravitationskreiswärmerohrkühlkörper, der einen Kondensator (21) und einen Verdampfer (22) umfasst, wobei ein Querkanal des Verdampfers (22) in dem Verdampfer (22), der für Dampfzirkulation verwendet wird, mit einem Querkanal (213) des Kondensators (21) in dem Kondensator (21), der für Dampfzirkulation verwendet wird, durch eine Dampfsteigrohrleitung (23) verbunden ist; wobei ein Querkanal (213) des Kondensators (21) in dem Kondensator (21), der für Flüssigkeitszirkulation verwendet wird, mit einem Querkanal des Verdampfers in dem Verdampfer, der für Flüssigkeitszirkulation verwendet wird, durch eine Flüssigkeitsfallrohrleitung (24) verbunden ist; und wobei der Kondensator (21) der Kondensator (21) nach einem der Ansprüche 10 bis 12 ist.

## Revendications

1. Procédé de production d'un condenseur dans un dissipateur thermique à caloduc à boucle de gravité, comprenant les étapes suivantes :
presser (SA11, SA21) un matériau de base d'un condenseur pour former un substrat de condenseur et plusieurs canaux longitudinaux du condenseur, les canaux longitudinaux du condenseur étant parallèles au et de part et d'autre du substrat de condenseur, et les canaux longitudinaux du condenseur étant configurés pour condenser la vapeur ;
percer (SB11, SB21) des trous aux deux extrémités du substrat de condenseur pour former des canaux transversaux du condenseur qui sont reliés aux canaux longitudinaux du condenseur, les canaux transversaux du condenseur aux deux extrémités supportant respectivement la circulation de vapeur et de liquide qui est formé après que la vapeur a été condensée ; et
sceller (SC11, SC21) des extrémités des canaux longitudinaux du condenseur et des extrémités des canaux transversaux du condenseur en fonction de trous déterminés sur le condenseur qui sont reliés à l'extérieur ; et
broyer (SD21) des matériaux de substrat entre les canaux longitudinaux du condenseur, de telle sorte qu'un espace existe entre des canaux longitudinaux adjacents du condenseur.

2. Procédé de production d'un condenseur dans un dissipateur thermique à caloduc à boucle de gravité selon la revendication 1, dans lequel des ailettes sont en outre formées par pressage ; et les ailettes font saillie le long d'une surface de substrat du substrat de condenseur, s'étendent le long de surfaces de substrat correspondant aux canaux longitudinaux du condenseur, et sont parallèles aux canaux longitudinaux du condenseur.

3. Procédé de production d'un condenseur dans un dissipateur thermique à caloduc à boucle de gravité selon la revendication 2, dans lequel les ailettes sont formées en pressant des surfaces sur deux côtés du substrat de condenseur.

4. Procédé de production d'un condenseur dans un dissipateur thermique à caloduc à boucle de gravité selon l'une quelconque des revendications 1 à 3, comprenant en outre l'étape suivante : percer des trous sur une surface de substrat correspondant aux canaux transversaux du condenseur aux deux extrémités pour former respectivement une entrée de vapeur et une sortie de liquide ; et
sceller des extrémités des canaux transversaux du condenseur et des extrémités de chacun des canaux longitudinaux du condenseur.

5. Procédé de production d'un condenseur dans un dissipateur thermique à caloduc à boucle de gravité selon la revendication 4, comprenant le perçage de parois environnantes des canaux transversaux du condenseur pour la circulation de liquide pour former un trou de remplissage de liquide.

6. Procédé de production d'un dissipateur thermique à caloduc à boucle de gravité, le dissipateur thermique ayant un condenseur et un évaporateur reliés l'un à l'autre, et le condenseur étant produit en utilisant le procédé de production selon l'une quelconque des revendications 1 à 5.

7. Procédé de production d'un dissipateur thermique à caloduc à boucle de gravité selon la revendication 6, dans lequel des étapes d'un procédé de production de l'évaporateur sont comme suit :
presser un matériau de base de l'évaporateur pour former un substrat d'évaporateur et plusieurs canaux longitudinaux de l'évaporateur, les canaux longitudinaux de l'évaporateur étant parallèles au et de part et d'autre du substrat d'évaporateur, et les canaux longitudinaux de l'évaporateur étant configurés pour faire circuler la vapeur ;
percer des trous aux deux extrémités du substrat d'évaporateur pour former des canaux transversaux de l'évaporateur qui sont reliés aux canaux longitudinaux de l'évaporateur, les canaux transversaux de l'évaporateur aux deux extrémités supportant respectivement la circulation de liquide et de vapeur qui est formée après que le liquide a été évaporé ; et
sceller des extrémités des canaux longitudinaux de l'évaporateur et des extrémités des canaux transversaux de l'évaporateur en fonction de trous déterminés sur l'évaporateur qui sont reliés à l'extérieur.

8. Procédé de production d'un dissipateur thermique à caloduc à boucle de gravité selon la revendication 7, dans lequel des ailettes sont en outre formées par pressage ; et les ailettes font saillie le long d'une surface de substrat du substrat d'évaporateur, s'étendent le long de surfaces de substrat correspondant aux canaux longitudinaux de l'évaporateur, et sont parallèles aux canaux longitudinaux de l'évaporateur.

9. Procédé de production d'un dissipateur thermique à caloduc à boucle de gravité selon la revendication 7 ou 8, comprenant en outre l'étape suivante : percer des trous sur une surface de substrat correspondant aux canaux transversaux de l'évaporateur aux deux extrémités pour former respectivement une sortie de vapeur et une entrée de liquide ; et
sceller des extrémités des canaux transversaux de l'évaporateur et des extrémités de chacun des canaux longitudinaux de l'évaporateur.

10. Condenseur (21) dans un dissipateur thermique à caloduc à boucle de gravité, le condenseur (21) ayant des canaux longitudinaux (212) et des canaux transversaux (213), les canaux transversaux (213) du condenseur (21) étant situés aux deux extrémités du condenseur (21), les canaux longitudinaux (212) du condenseur (21) et les canaux transversaux (213) du condenseur (21) étant intégrés, un substrat du condenseur (21) et les canaux longitudinaux (212) du condenseur (21) étant formés en pressant un matériau de base du condenseur (21), et les canaux transversaux (213) du condenseur (21) étant formés en perçant des trous aux deux extrémités du substrat du condenseur (21) ; une entrée de vapeur et une sortie de liquide existant respectivement sur les canaux transversaux (213) du condenseur (21) aux deux extrémités ; et les canaux longitudinaux (212) du condenseur (21) et les canaux transversaux (213) du condenseur (21) étant reliés à l'extérieur par l'entrée de vapeur et la sortie de liquide,
un espace formé par broyage existant entre des canaux longitudinaux adjacents du condenseur.

11. Condenseur (21) dans un dissipateur thermique à caloduc à boucle de gravité selon la revendication 10, le condenseur (21) ayant des ailettes (211) formées par pressage ; et les ailettes (211) faisant saillie le long d'une surface de substrat du substrat de condenseur, s'étendant le long de surfaces de substrat correspondant aux canaux longitudinaux (212) du condenseur (21), et étant parallèles aux canaux longitudinaux (212) du condenseur (21).

12. Condenseur (21) dans un dissipateur thermique à caloduc à boucle de gravité selon la revendication 11, dans lequel l'entrée de vapeur et la sortie de liquide sont formées en perçant des trous sur une surface de substrat correspondant aux canaux transversaux (212) du condenseur (21).

13. Dissipateur thermique à caloduc à boucle de gravité, comprenant un condenseur (21) et un évaporateur (22), dans lequel un canal transversal de l'évaporateur (22), sur l'évaporateur (22), utilisé pour la circulation de vapeur est relié à un canal transversal (213) du condenseur (21), sur le condenseur (21), utilisé pour la circulation de vapeur par une conduite montante de vapeur (23) ; un canal transversal (213) du condenseur (21), sur le condenseur (21), utilisé pour la circulation de liquide est relié à un canal transversal de l'évaporateur, sur l'évaporateur, utilisé pour la circulation de liquide par une conduite descendante de liquide (24) ; et le condenseur (21) est le condenseur (21) selon l'une quelconque des revendications 10 à 12.
